# EUROPÄISCHE PATENTSCHRIFT

(11) **EP 3 384 172 B1**
(45) Veröffentlichungstag und Bekanntmachung des Hinweises auf die Patenterteilung: **05.05.2021**
(21) Anmeldenummer: 16816217.0
(22) Anmeldetag: 01.12.2016
(51) Int. Cl.: F16D 3/68, F16D 3/78

(54) **KUPPLUNGSRING**
COUPLING RING
BAGUE D'ACCOUPLEMENT

(30) Priorität: 04.12.2015 DE 202015008453 U
(43) Veröffentlichungstag der Anmeldung: 10.10.2018
(73) Patentinhaber: KWD Kupplungswerk Dresden GmbH, 01159 Dresden (DE)
(72) Erfinder: HÄHNEL, Thomas, 01723 Wilsdruff (DE); KLITZSCH, Thomas, 01157 Dresden (DE)
(74) Vertreter: Rauschenbach, Marion
(86) Internationale Anmeldenummer: PCT/EP2016/079372
(87) Internationale Veröffentlichungsnummer: WO 2017/093372

(56) Entgegenhaltungen:
- EP-A2- 0 937 902
- EP-A2- 2 325 510
- WO-A1-2013/041082
- GB-A- 377 454

## Beschreibung

Die Erfindung betrifft einen Kupplungsring für Kupplungen mit mindestens zwei Kupplungsteilen.

In der Druckschrift WO 2013/041082 A1 ist ein Kupplungsring in Form eines Keilpaketrings für Kupplungen mit zwei Kupplungsteilen beschrieben, der in Fig. 1, Fig. 2 und Fig. 3 schematisch dargestellt ist, wobei Fig. 1 eine perspektivische Darstellung des herkömmlichen Keilpaketrings 1 zeigt, der als einheitlicher, zumindest innerhalb von Befestigungselementen 10, 11 ungeteilter und unsegmentierter, einstückiger Ring, wie auch in Fig. 2 gezeigt ist, ausgebildet ist, der als Ganzes auf die in Fig. 3 angegebenen beiden Kupplungsteile 8, 9 unter Vorspannung montiert ist.

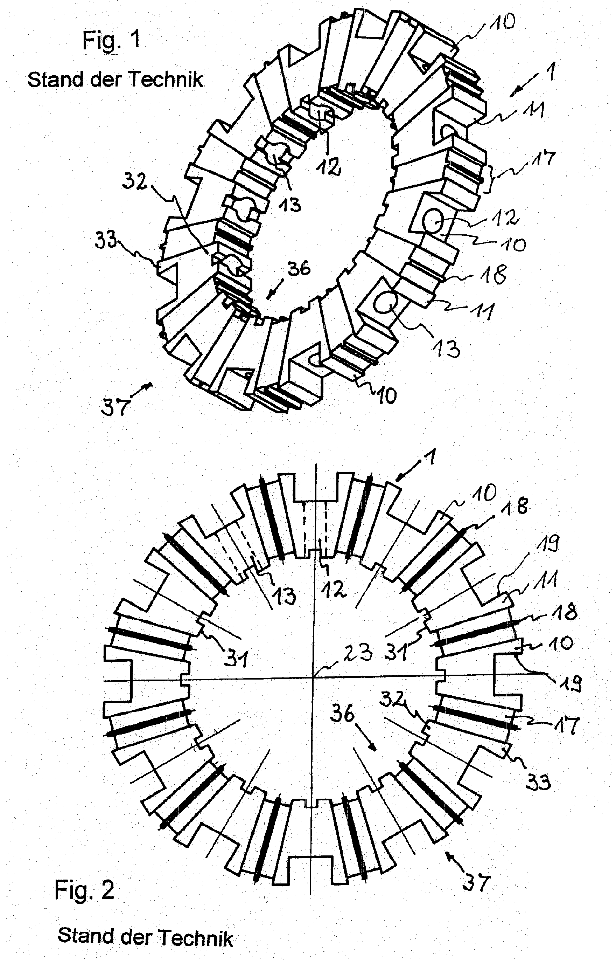

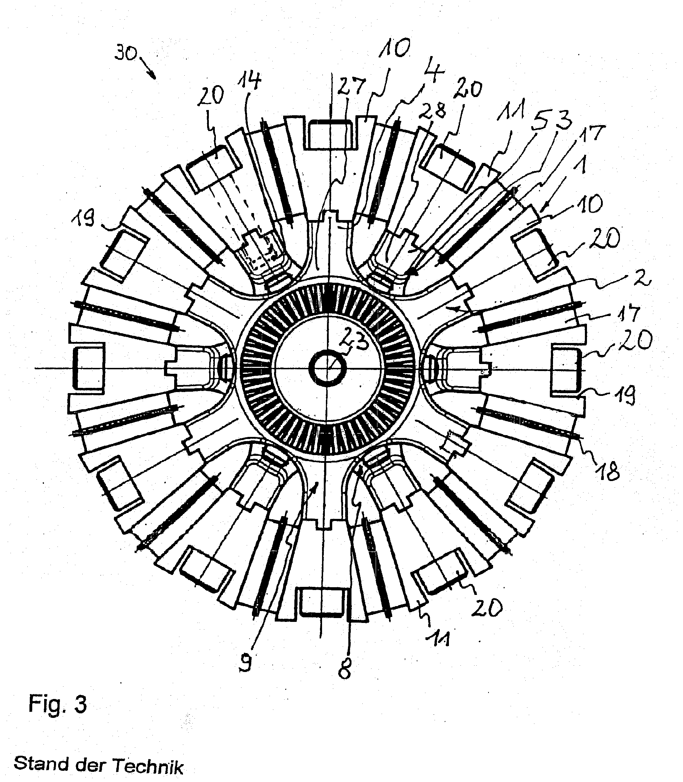

Der Keilpaketring 1 umfasst mehrere zur Ringachse 23 des Keilpaketrings 1 gerichtete, ringumlaufend angeordnete, gleichgestaltete Befestigungselemente 10, 11 mit jeweils einer ausschließlich radial zur Ringachse 23 gerichteten, durchgängigen und in Fig. 2 gezeigten Bohrung 12, 13, wobei die durchgängigen Bohrungen 12, 13 für mindestens eine ausschließlich radial gerichtete, vom Ringaußenbereich 37 aus ausführbare in Fig. 3 gezeigte Verschraubung 20 zur Befestigung der Befestigungselemente 10, 11 auf die zwei angepassten, in Fig. 3 dargestellten Kupplungsteile 8, 9 zur Verbindung der beiden Kupplungsteile 8, 9 dienen, wobei
- die Befestigungselemente 10, 11 des Keilpaketrings 1 am in Fig. 2 gezeigten Ringinnenbereich 36 jeweils ein Profil 31 zur Ringachse 23 gerichtet aufweisen,
- zwischen den ringumlaufend benachbarten Befestigungselementen 10, 11 jeweils ein elastisches Federelement 17 vorhanden ist, das an den benachbarten Befestigungselementen 10, 11 in einem gleichzeitig durchgeführten Vulkanisierungsvorgang anvulkanisiert befestigt ist,
- so dass eine ringumlaufend wechselweise Anordnung der Befestigungselemente 10, 11 und der elastischen Federelemente 17 den Keilpaketring 1 darstellt, der als einstückiger Ring auf den zwei angepassten Kupplungsteilen 8, 9 zur Verbindung der beiden Kupplungsteile 8, 9 radial aufgeschraubt ist.

In Fig. 2 ist eine Querschnitts-Darstellung des herkömmlichen einstückigen Keilpaketrings 1 gemäß Fig. 1 gezeigt.

Die Fig. 3 zeigt eine schematische Darstellung einer Kupplung 30 mit den zwei Kupplungsteilen 8,9 mit dem daran befestigten einstückigen Keilpaketring 1 nach den Fig. 1 und Fig. 2.

In der Kupplung 30 mit dem einstückigen Keilpaketring 1 auf den zwei Kupplungsteilen 8, 9 - einem antriebsseitigen Kupplungsteil 8 und einem abtriebsseitigen Kupplungsteil 9 -, weisen die Kupplungsteile 8, 9 in Fig. 3 jeweils einen Stern 2, 3 mit Sternarmen 27, 28 und daran befindlichen Sternarmstirnbereichen 4, 5 auf, wobei die beiden Sterne 2, 3 sich gegenüberliegend und axial zueinander winkelversetzt in der Kupplung 30 angeordnet sind und die axial zur jeweiligen Sternmitte versetzten Sternarmstirnbereiche 4, 5 mit jeweils mindestens einer Gewindebohrung 14 für Verschraubungen 20 des Keilpaketrings 1 versehen sind.

Die Befestigungselemente 10, 11 können aus festem Material bestehen und insbesondere metallisch ausgebildet sein.

Die Befestigungselemente 10, 11 können mit verschiedenen geometrischen Körper-Formen ebenso wie die elastischen Federelemente 17 mit verschiedenen, den Formen der Befestigungselemente 10, 11 angepassten geometrischen Formen versehen sein.

Die Befestigungselemente 10, 11 können im Querschnitt zumindest auf zwei sich gegenüberliegenden Seiten von ringaußen nach ringinnen gerichtet tailliert und/oder profiliert sein.

Die Befestigungselemente 10, 11 können vom Ringrandaußenbereich 37 aus zur Ringachse 23 gerichtet keilförmig geformt sein, wobei gemäß der Fig. 1 und der Fig. 2 der keilförmig schmale Endbereich 32 ringinnen und der keilförmig weite Endbereich 33 ringaußen sind.

Die Befestigungselemente 10, 11 können an ihrem keilförmig weiten Endbereich 33 vorzugsweise äußere Einlassungen/Aussparungen/Vertiefungen 19 jeweils in Form entweder einer Versenkungsnut oder einer Senkbohrung für die radial gerichteten Verschraubungen 20 aufweisen.

Die Federelemente 17 können aus elastischem Material bestehen.

Die elastischen Federelemente 17 können, wie in Fig. 1 bis Fig. 3 gezeigt, mindestens eine zur Ringachse 23 gerichtete Stützplatte 18 aufweisen.

Die elastischen Federelemente 17 können aber auch mindestens eine Stützplatte jeweils in topographischer Ausbildungsform, z.B. flächenbombiert und nicht ausschließlich zur Ringachse 23 gerichtet zwischen jeweils zwei Federelementen eingebettet enthalten.

Die Stützplatten 18 können in Keilform zur Ringachse 23 gerichtet ausgebildet sein.

Die Federelemente 17 oder Teile davon können mit zumindest einer radial und/oder axial zur Ringachse 23 gerichteten konkaven Taille ausgebildet sein.

Der Nachteil des herkömmlichen, ganzheitlichen und einstückigen Keilpaketrings 1 besteht darin, dass für eine Reparatur im Falle eines Defektes zumindest eines der Befestigungselemente 10, 11 oder der Federelemente 17 oder im Falle eines Defektes des Kontaktes zwischen den Befestigungselementen 10, 11 und den Federelementen 17 eine zeitaufwändige Demontage sowie danach eine ebenso mühevolle Montage des ungeteilten und unsegmentierten Keilpaketrings 1 auf die beiden Kupplungsteile 8, 9 erforderlich sind.

Aus der EP 2 325 510 A2 ist Kupplung, insbesondere Keilpaketkupplung, mit einem im Wesentlichen ringförmigen Kupplungskörper bekannt, welcher aus einer Vielzahl einzelner gummielastischer Segmente gebildet ist, in welche Befestigungsglieder mit Befestigungsbohrungen zur Anordnung an einem antreibenden und einem angetriebenen Maschinenbauteil sowie elastizitätsverringernde Elemente einvulkanisiert sind. Dabei sind die Segmente mittels scharnierartiger Verbindungselemente aneinander festgelegt sind und bilden einen einstückigen, radial aufweitbaren, im Wesentlichen ringförmigen Kupplungskörper.

Der Erfindung liegt deshalb die Aufgabe zugrunde, einen Kupplungsring für Kupplungen mit mindestens zwei Kupplungsteilen anzugeben, der derart geeignet ausgebildet ist, dass insbesondere im Fall einer Reparatur bei Defekten am als Keilpaketring ausgebildeten Kupplungsring und in dessen Kupplungsbereich der Keilpaketring einfacher und leichter bei der Montage auf die beiden Kupplungsteile der Kupplung aufgebracht werden kann.

Die Aufgabe wird durch die Merkmale des Patentanspruchs 1 gelöst.

Der Kupplungsring für Kupplungen mit mindestens zwei Kupplungsteilen, wobei der Kupplungsring als Keilpaketring ausgebildet ist, umfasst zumindest mehrere zur Ringachse des Keilpaketrings gerichtete, ringumlaufend angeordnete Befestigungselemente mit jeweils mindestens einer ausschließlich radial zur Ringachse gerichteten durchgängigen Bohrung, wobei die durchgängigen Bohrungen für mindestens eine ausschließlich radial gerichtete, vom Ringaußenbereich aus ausführbare Verschraubung zur Befestigung der Befestigungselemente auf die zwei angepassten, winkelversetzt angeordneten Kupplungsteile zur Verbindung der beiden Kupplungsteile dienen, wobei
- die Befestigungselemente am Ringinnenbereich jeweils ein axial verlaufendes Profil zur Ringachse gerichtet aufweisen,
- zwischen den benachbarten Befestigungselementen jeweils ein elastisches Federelement vorhanden ist, das an den benachbarten Befestigungselementen in einem gleichzeitig durchgeführten Vulkanisierungsvorgang anvulkanisiert befestigt ist,
- so dass eine wechselweise Anordnung der Befestigungselemente und der elastischen Federelemente einen Keilpaketring darstellt, der auf die zwei angepassten Kupplungsteile zur Verbindung der beiden Kupplungsteile radial aufschraubbar ist,
wobei gemäß dem Kennzeichenteil des Patentanspruchs 1
der Keilpaketring in mindestens zwei voneinander trennbare einstückige Ringsegmente aus einer wechselweisen Anordnung der Befestigungselemente und der Federelemente geteilt ist, wobei die voneinander trennbaren einstückigen Ringsegmente durch an einem Ringsegment jeweils endbereichsseitig befindliche und zur Ausbildung eines Schlusses versehene, geteilte Schluss- Befestigungselemente bestückt sind, wobei die geteilten und voneinander trennbaren, die Ringsegmente verbindenden Schluss-Befestigungselemente jeweils aneinander angepasste Keil-Teile mit zur Ringachse radial gerichtete Bohrungen aufweisen, wobei die korrespondierend angepassten Keil-Teile jeweils zur radialen Verschraubung auf eine der beiden Kupplungsteile zusammenfügbar sind.

Die Schluss-Befestigungselemente sind Elemente, die durch die Teilung bzw. Segmentierung des Keilpaketrings anstelle der ursprünglichen ungeteilten Befestigungselemente entstehen.

Ein Schluss kommt dann an den jeweiligen Endbereichen der voneinander trennbaren Ringsegmente zustande, wenn eine bestimmte Kontaktfläche des Keil-Außenteils mit einer korrespondierenden Kontaktfläche des Keil-Innenteils in festem Kontakt miteinander steht. Je nach Lage der Kontaktflächen können das dann ein Formschluss oder ein Kraftschluss oder beide Schlüsse in Kombination sein.

Ein mindestens in zwei voneinander trennbare einstückige Ringsegmente geteilter Keilpaketring kann mit einem Keil-Innenteil und mit einem Keil-Außenteil an jeweils einem Endbereich des jeweils zugehörigen Ringsegments versehen sein, wobei bei Vorhandensein von zwei Ringsegmenten
ein erstes Ringsegment mit einem Keil-Außenteil an seinem einen Endbereich und einem Keil-Innenteil an seinem anderen Endbereich ausgebildet sein kann und
ein zweites Ringsegment mit einem Keil-Außenteil an seinem einen Endbereich und einem Keil-Innenteil an seinem anderen Endbereich ausgebildet sein kann,
wobei sich jeweils das Keil-Innenteil des einen Ringsegments und Keil-Außenteil des anderen Ringsegments vor der Schließung des Rings gegenüberliegen und bei Schließung des Rings über einen Schluss miteinander kontaktieren.

Sowohl mittels der radial gerichteten Verschraubungen sind alle Befestigungselemente an Sternarmstirnbereiche der Sterne der Kupplungsteile anschraubbar als auch mittels der radial gerichteten Verschraubungen sind die beiden Ringsegmente über die geteilten Schluss-Befestigungselemente unter Vorspannung an die Sternarmstirnbereiche der Sterne der Kupplungsteile anschraubbar.

Ein voneinander trennbares Schluss-Befestigungselement kann z.B. aus einem im Längsschnitt spitzhammerartigen Keil-Außenteil und aus einem im Längsschnitt stuhlartigen Keil-Innenteil miteinander angepasst bestehen, die jeweils mit ihren an den Keil-Innenteilen befindlichen Kontaktflächen und ihren an den Keil-Außenteilen befindlichen Kontaktflächen bei Schlussausbildung in unmittelbarem Kontakt bei Schließung des Keilpaketrings stehen.

Das beispielsweise im Längsschnitt stuhlartige Keil-Innenteil kann durch ein angebrachtes Kopfschlussteil modifiziert sein und bei Schlussausbildung das Kopfschlussteil auch an dem im Längsschnitt spitzhammerartigen Keil-Außenteil anliegen.

Ein Ringsegment kann mit halbierten Schlussteil-Befestigungselementen an den Endbereichen des Ringsegments mindestens mit einer ersten Ausnehmung innerhalb der Vertiefung des halbierten Schlussteil-Befestigungselements und mindestens mit einer zweiten Ausnehmung innerhalb der Vertiefung des anderen halbierten Schlussteil-Befestigungselements ausgebildet sein, wobei die beiden Ringsegmente zu einem Ring zusammenfügbar sind, wenn die zueinander korrespondierenden halbierenden Schlussteil-Befestigungselemente sich jeweils gegenüberliegend kontaktieren bzw. über die Verschraubung geführt und somit jeweils ein geschlossenes Schluss-Befestigungselement ausbilden und
wobei in den voneinander beabstandeten Ausnehmungen der Vertiefungen klemmen- oder brückenartige Einfügeelemente zur Halterung der halbierten Schlussteil-Befestigungselemente eingebracht sind.

Die beiden voneinander trennbaren Schlussteil-Befestigungselementhälften können mit den sich gegenüberliegenden Ausnehmungen zwischen sich einen Ringspalt zur Aufnahme eines Blechrings aufweisen.

Die Einfügeelemente für zwei einander zugeordnete Ausnahmen in den Schluss-Befestigungselementen können als Klemmen oder Brücken mit parallel gleichgerichteten, endseitigen Nasen ausgebildet sein und mit ihren endseitigen Nasen in die den Nasen angepassten Ausnehmungen zur Arretierung und Verschluss der beiden Schlussteil-Befestigungselementhälften zur Ausbildung der Schluss-Befestigungselemente eingefügt bzw. gesteckt sein.

Alle Befestigungselemente können aus festem Material bestehen, insbesondere metallisch ausgebildet sein.

Die Formen der Befestigungselemente können den Formen des Federelements angepasst sein, so dass die Vulkanisierung der Federelemente an die Befestigungselemente sowohl bei den Ringsegmenten als auch beim ganzen Keilpaketring in gleicher Qualität erfolgt.

Alle Befestigungselemente können zur Ringachse keilförmig geformt sein, wobei der keilförmig schmale Endbereich ringinnen und der keilförmig weite Endbereich ringaußen sind.

Alle Befestigungselemente können an ihrem keilförmig weiten Endbereich vorzugsweise äußere Einlassungen/Aussparungen/Vertiefungen jeweils in Form entweder einer Versenkungsnut oder einer Senkbohrung für die radial gerichteten Verschraubungen aufweisen.

Die Federelemente können aus elastischem Material bestehen.

Die mittige Bohrung eines geteilten Befestigungselements kann mit einer Hülse, durch die die Schraube der Verschraubung geführt ist und die als Haltehülse für die beiden Teile des geteilten Befestigungselementes dient, versehen sein.

Durch die mittige Bohrung eines geteilten Befestigungselements kann auch eine Passschraube geführt sein.

Die elastischen Federelemente können mindestens eine zur Ringachse gerichtete Stützplatte aufweisen.

Die radial gerichteten Stützplatten können federelementmittig angeordnet sein. Die Stützplatten können nicht nur mit parallelen ebenen Flächen, sondern auch in einer Keilform zur Ringachse gerichtet ausgebildet sein. Außerdem können die Federelemente mit zumindest einer radial und/oder axial zur Ringachse gerichteten, konkaven Taille ausgebildet sein, wobei bei Vorhandensein einer Stützplatte zu beiden Seiten der jeweiligen Stützplatte der jeweilige Teil des Federelements mit axial zur Ringachse gerichteten konkaven Taillen ringaußen und ringinnen versehen ist. Ebenso kann es sich in der zur Ringachse gerichteten radialen Richtung verhalten, wobei die radial gerichteten konkaven Taillen ringseitlich am Federelement vorhanden sind.

Weiterbildungen und spezielle Ausgestaltungen der Erfindung werden in Details der weiteren Unteransprüche angegeben.

Die Erfindung wird anhand von Ausführungsbeispielen mittels mehrerer Zeichnungen näher erläutert.

Es zeigen:
Fig. 1 eine schematische perspektivische Darstellung eines einstückigen Kupplungsrings in Form eines Keilpaketrings ohne Kupplungsteile nach dem Stand der Technik,
Fig. 2 eine Querschnitts-Darstellung des Keilpaketrings nach Fig. 1,
Fig. 3 eine Darstellung in axialer Ansicht einer herkömmlichen Kupplung mit Keilpaketring mit ausschließlich radial gerichteten Verschraubungen an den Sternarmstirnbereichen der beiden Sterne der zugehörigen Kupplungsteile der Kupplung nach dem Stand der Technik,

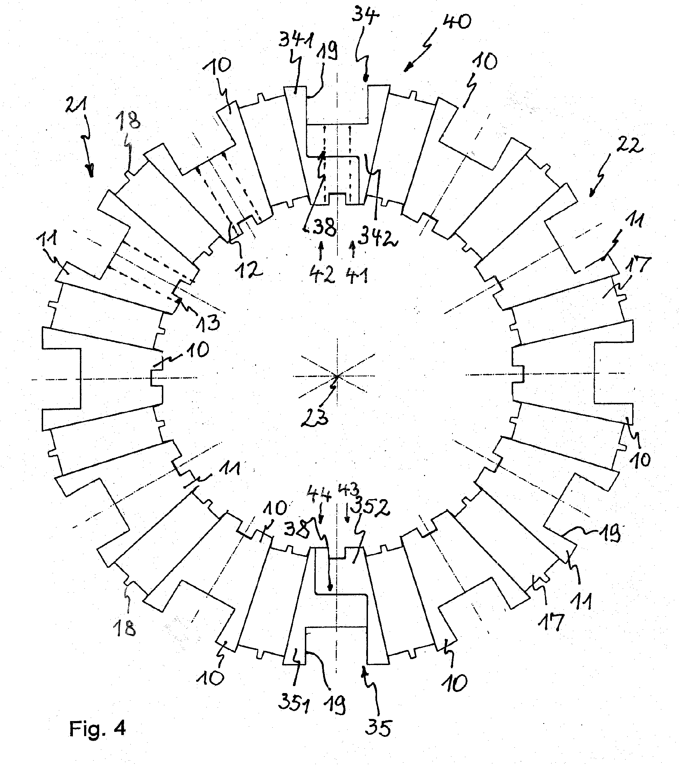

Fig. 4 eine Querschnitts-Darstellung des erfindungsgemäßen, an den Endbereichen zweier einstückiger Ringsegmente zusammengeführten und vorgespannten Kupplungsring in Form eines Keilpaketrings,

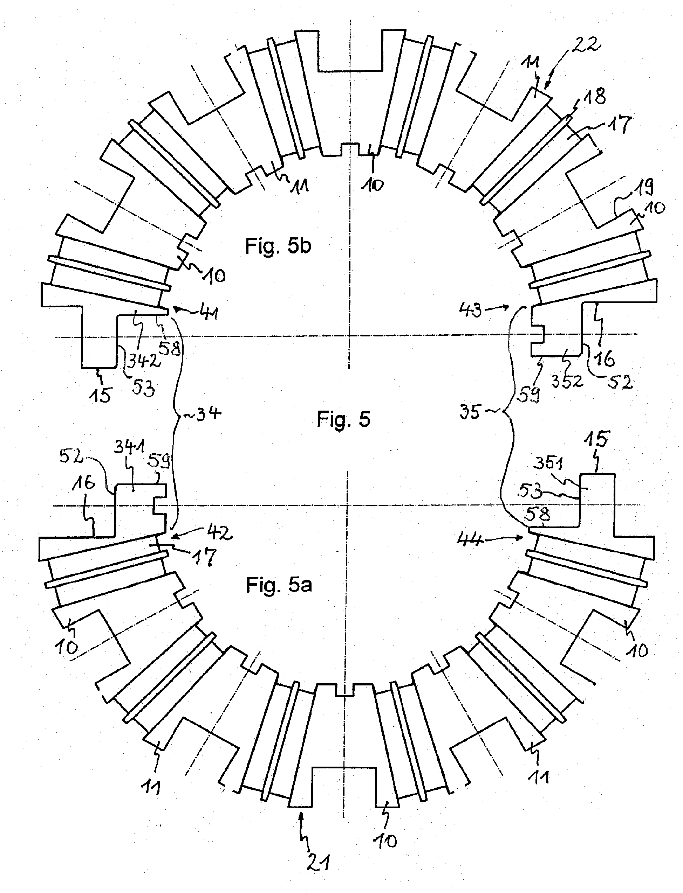

Fig. 5 Darstellungen zum in zwei einstückige Ringsegmente geteilten Keilpaketring mit einem Keil-Innenteil und mit einem Keil-Außenteil an jeweils einem Endbereich eines Ringsegments, wobei
   Fig. 5a ein erstes Ringsegment mit einem Keil-Außenteil an dem einen Endbereich und einem Keil-Innenteil an dem anderen Endbereich, und
   Fig. 5b ein zweites Ringsegment mit einem Keil-Innenteil an dem einen Endbereich und einem Keil-Außenteil an dem anderen Endbereich,
   wobei sich jeweils ein Keil-Innenteil des einen Ringsegments und ein Keil-Außenteils des anderen Ringsegments angepasst ausgebildet gegenüberliegen,
   zeigen,

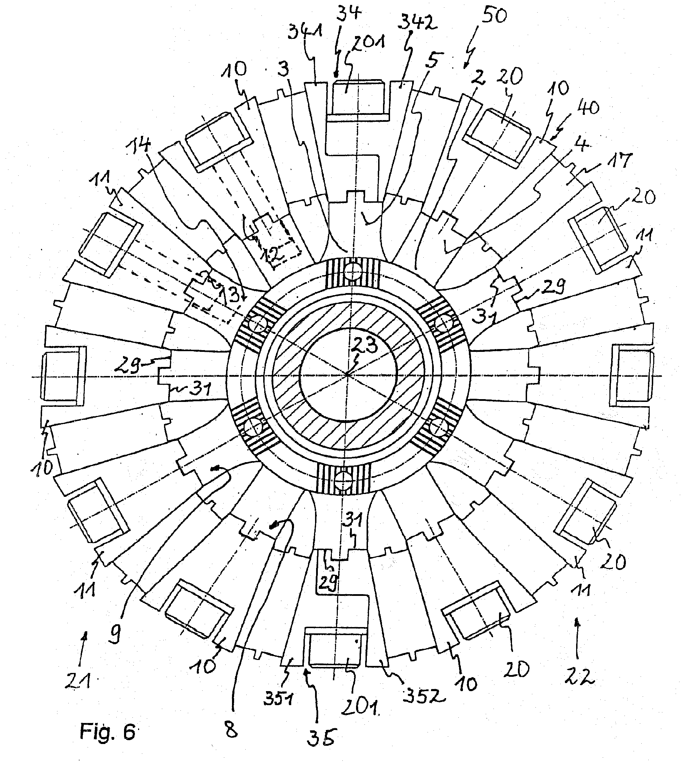

Fig. 6 eine Darstellung in axialer Ansicht einer Kupplung mit dem erfindungsgemäßen ringsegmentierten Keilpaketring mit ausschließlich radial gerichteten Verschraubungen an den Sternarmstirnbereichen der beiden Sterne der zugehörigen Kupplungsteile der Kupplung,

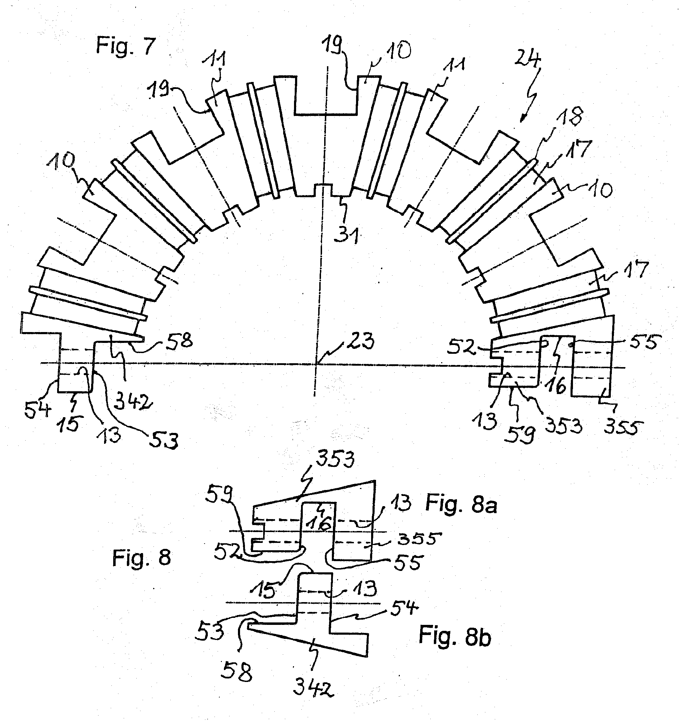

Fig. 7 eine schematische Darstellung eines Ringsegments eines erfindungsgemäßen Keilpaketrings mit einer anderen Ausführung des Keil-Innenteils und des Keil-Außenteils gegenüber Fig. 5a und Fig. 5b,
Fig. 8 Längsschnitt-Darstellungen von Keil-Teilen, wobei
   Fig. 8a ein gegenüber den Fig. 5a und Fig. 5b modifiziertes Keil-Innenteil und
   Fig. 8b ein gleiches Keil-Außenteil wie in Fig. 5a und Fig. 5b zeigen,

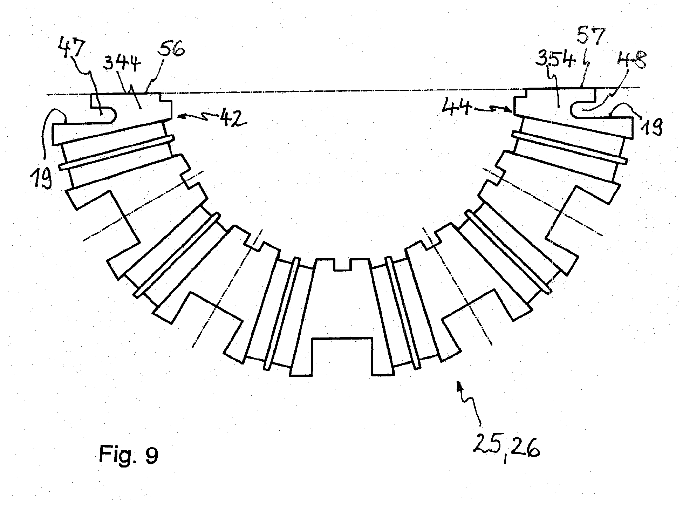

Fig. 9 eine Darstellung eines Ringsegments mit halben Schlussteil-Befestigungselementen an den Endseiten des Ringsegments, wobei ein Schluss-Befestigungselement in zwei Schlussteil-Befestigungselementhälften geteilt ist,

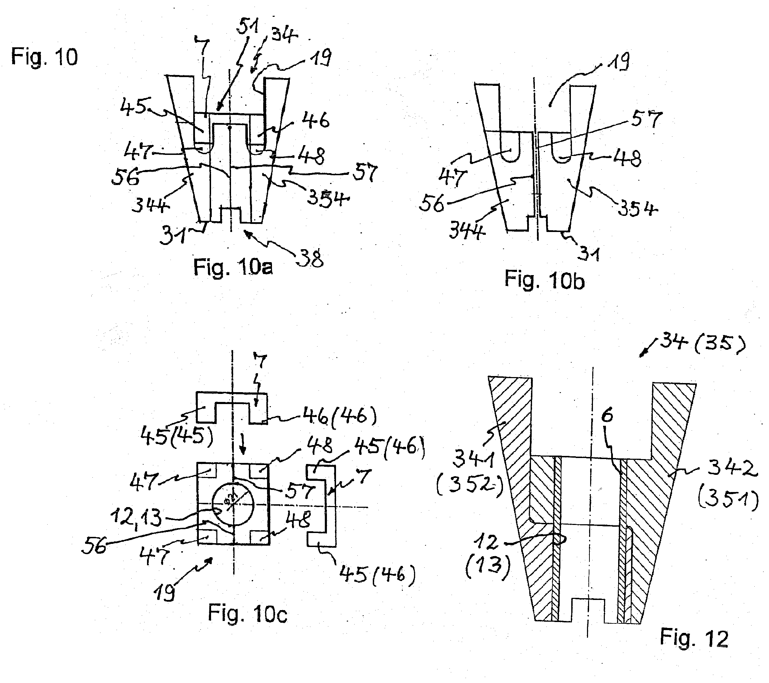

Fig. 10 mehrere Darstellungen von Komponenten einer Verschlussvorrichtung zur Zusammenführung der einstückigen Ringsegmente des Keilpaketrings, wobei
   Fig. 10a die Verschlussvorrichtung mit den beiden Schlussteil-Befestigungselementhälften und mit den in die sich gegenüberliegenden Ausnehmungen der Schlussteil-Befestigungselementhälften verrasteten Einfügeelemente und einem zwischen den beiden Schlussteil-Befestigungselementhälften befindlichen Blechring,
   Fig. 10b die beiden Schlussteil-Befestigungselementhälften mit den sich gegenüberliegenden Ausnehmungen und einem Ringspalt zwischen den Schlussteil-Befestigungselementhälften, und
   Fig. 10c eine Draufsicht auf die Vertiefung der sich berührenden beiden Schlussteil-Befestigungselementhälften,
   zeigen,

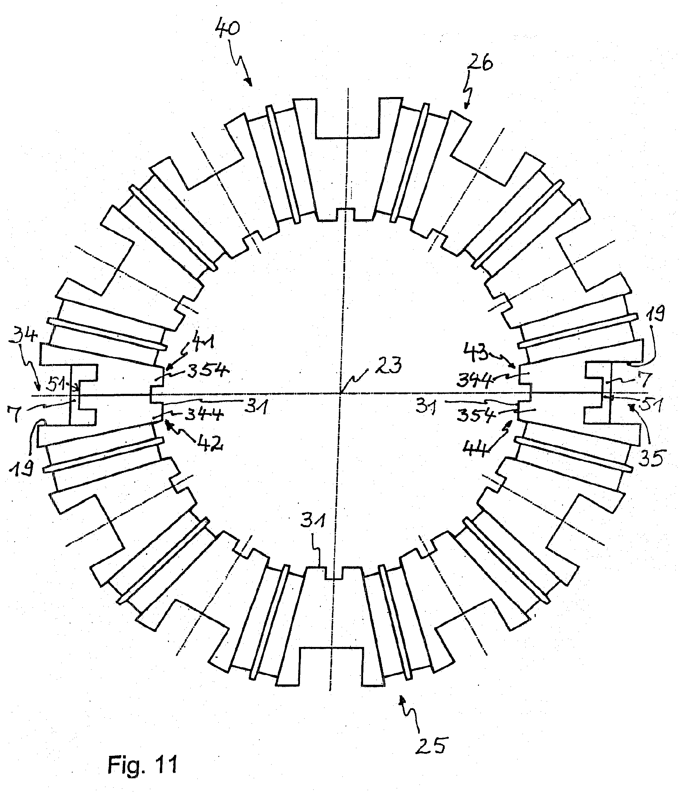

Fig. 11 eine schematische Darstellung des erfindungemäßen Keilpaketrings ohne Kupplungsteile mit den beiden Verschlussvorrichtungen aufweisenden Schlussteil-Befestigungselementen und
Fig. 12 eine schematische Darstellung eines geteilten Befestigungselements mit einer Hülse im Innern.

Im Folgenden werden die Fig. 4 und Fig. 5 mit den Fig. 5a und Fig. 5b sowie Fig. 6 unter Berücksichtigung von Bezugszeichen der Kupplung 30 gemäß Fig. 3 des Standes der Technik gemeinsam betrachtet.

In Fig. 4 ist in einer schematischen Darstellung ein Kupplungsring 40 in Form eines Keilpaketrings für eine Kupplung 50 mit den zwei Kupplungsteilen 8, 9 ausgebildet, wobei der Keilpaketring 40 zumindest umfasst mehrere zur Ringachse 23 des Keilpaketrings 40 gerichtete, ringumlaufend angeordnete Befestigungselemente 10, 11 mit jeweils einer ausschließlich radial zur Ringachse 23 gerichteten durchgängigen Bohrung 12, 13, wobei die durchgängigen Bohrungen 12, 13 für mindestens eine ausschließlich radial gerichtete, vom Ringaußenbereich 37 aus ausführbare Verschraubung 20 zur Befestigung der Befestigungselemente 10, 11 auf die zwei angepassten, in Fig. 6 dargestellten Kupplungsteile 8, 9 zur Verbindung der beiden Kupplungsteile 8, 9 dienen, wobei
- die Befestigungselemente 10, 11 am Ringinnenbereich 36 jeweils ein axial verlaufendes Profil 31 zur Ringachse 23 gerichtet aufweisen,
- zwischen den benachbarten Befestigungselementen 10, 11 jeweils ein elastisches Federelement 17 vorhanden ist, das an den benachbarten Befestigungselementen 10, 11 in einem gleichzeitig durchgeführten Vulkanisierungsvorgang anvulkanisiert befestigt ist,
- so dass eine wechselweise Anordnung der Befestigungselemente 10, 11 und der elastischen Federelemente 17 einen Keilpaketring 40 darstellt, der auf die zwei angepassten Kupplungsteile 8, 9 zur Verbindung der beiden Kupplungsteile 8, 9 radial aufschraubbar ist.

Erfindungsgemäß ist, wie in Fig. 5 gezeigt ist, der Keilpaketring 40 in mindestens zwei einstückige Ringsegmente 21, 22 aus einer wechselweisen Anordnung der Befestigungselemente 10, 11 und der Federelemente 17 geteilt, wobei die einstückigen Ringsegmente 21, 22 durch jeweils an einem Ringsegment 21, 22 endbereichsseitig befindliche und zur Ausbildung eines kontaktierenden Schlusses 38 versehene geteilte Schluss-Befestigungselemente 34, 35 bestückt sind, wobei die die Ringsegmente 21, 22 verbindenden Schluss-Befestigungselemente 34, 35 jeweils aneinander angepasste Keil-Teile 341, 342 und 351, 352 mit zur Ringachse 23 radial gerichteten Bohrungen 12, 13 aufweisen, wobei die verrasteten Keil-Teile 341, 342 und 351, 352 jeweils über eine radial gerichtete Verschraubung 201 auf den beiden Kupplungsteilen 8, 9 zu den Schluss-Befestigungselementen 34, 35 zusammenfügbar sind.

Während die Befestigungselemente 10, 11 einstückige Elemente sind, entstehen durch die Teilung bzw. Segmentierung des Keilpaketrings 40 aus anstelle den ursprünglichen Befestigungselementen 10, 11 am jeweiligen Endbereich 41, 42 sowie 43, 44 der Ringsegmente 21, 22 gemäß Fig. 5, Fig. 5a und Fig. 5b die geteilten Schluss-Befestigungselemente 34, 35.

Der in Fig. 4 gezeigte Schluss 38 an den jeweiligen Endbereichen 41-42, 43-44 der Ringsegmente 21, 22 kommt zustande, wenn die vorgegebenen Kontaktflächen 15, 58 des Keil-Außenteils 342 oder 351 mit der mit den Kontaktflächen 15, 58 korrespondierenden Kontaktflächen 16, 59 des Keil-Innenteils 341, 352 gemäß Fig. 5a, 5b in festem Kontakt gemäß Fig. 4, in einem Formschluss, stehen.

Die Fig. 4 zeigt dabei eine Querschnitts-Darstellung des erfindungsgemäßen, an den in Fig. 5 bzw. Fig. 5a und Fig. 5b angegebenen Endbereichen 41, 42 und 43, 44 der Ringsegmente 21, 22 zusammenführbaren und vorspannbaren Keilpaketrings 40. Der Keilpaketring 40 ist in den Fig. 5, 5a, 5b in seine beiden einstückigen Ringsegmente 21, 22 getrennt dargestellt. Alternativ können an den Endbereichen der Ringsegmente gleiche Keil-Teile vorhanden sein.

Die Darstellungen in Fig. 5 zum in die zwei Ringsegmente 21, 22 geteilten Keilpaketring 40 sind mit einem Keil-Innenteil 341, 352 und mit einem Keil-Außenteil 342, 351 an jeweils einem Endbereich 41, 42; 43, 44 des jeweils zugehörigen Ringsegments 21; 22 versehen, wobei die
Fig. 5a ein erstes Ringsegment 21 mit einem im Längsschnitt spitzhammerartigen Keil-Außenteil 351 an seinem einen Endbereich 44 und einem im Längsschnitt stuhlartigen Keil-Innenteil 341 an seinem anderen Endbereich 42 zeigt, und die
Fig. 5b ein zweites Ringsegment 22 mit einem im Längsschnitt spitzhammerartigen Keil-Außenteil 342 an dem einen Endbereich 41 und einem im Längsschnitt stuhlartigen Keil-Innenteil 352 an dem anderen Endbereich 43 zeigt,
wobei sich jeweils das im Längssschnitt stuhlartigen Keil-Innenteil 341; 352 des einen Ringsegments 21; 22 und das im Längsschnitt spitzhammerartigen Keil-Außenteil 342; 351 des anderen Ringsegments 22; 21 jeweils für einen Schluss 38 gegenüberliegen. Die kontaktierenden Kontaktflächen 15, 16 und 58, 59 bilden einen Formschluss, die kontaktierenden Kontaktflächen 52, 53 bilden einen Kraftschluss. Da in den Kontaktbereichen je nach radial gerichteten Flächen 15, 16 sowie 58, 59 Formschlüsse und je nach tangential gerichteten Flächen 52, 53 Kraftschlüsse auftreten, werden diese geteilten Befestigungselemente als Schluss-Befestigungselemente oder Schlussteil-Befestigungselemente bezeichnet.

Die Fig. 6 zeigt eine Darstellung in axialer Ansicht einer Kupplung 50 mit dem erfindungsgemäßen Keilpaketring 40 mit ausschließlich radial gerichteten Verschraubungen 20, 201 an den Sternarmstirnbereichen 4, 5 der beiden Sterne 2, 3 der zugehörigen Kupplungsteile 8, 9 der Kupplung 50.

In der dargestellten Kupplung 50 mit dem zusammengefügten segmentierten Keilpaketring 40 auf den zwei Kupplungsteilen 8, 9 - einem antriebsseitigen Kupplungsteil 8 und einem abtriebsseitigen Kupplungsteil 9 -, weisen die Kupplungsteile 8, 9 jeweils einen Stern 2, 3 mit Sternarmen und daran befindlichen Sternarmstirnbereichen 4, 5 auf, wobei die beiden Sterne 2, 3 sich gegenüberliegend und axial zueinander winkelversetzt in der Kupplung 50 angeordnet sind und die axial zur jeweiligen Sternmitte versetzten Sternarmstirnbereiche 4, 5 mit jeweils mindestens einer Gewindebohrung 14 für radiale Verschraubungen 20, 201 des Keilpaketrings 40 versehen sind.

Zum geschlossenen ringsegmentierten Keilpaketring 40 gehören mehrere zur Achse 23 des Keilpaketrings 40 gerichtete, ringsegmentumlaufend angeordnete, keilförmig geformte, metallische Befestigungselemente 10, 11, 34, 35 mit jeweils mindestens einer ausschließlich radial zur Ringachse 23 gerichteten durchgängigen Bohrung 12, 13, wobei die durchgängigen Bohrungen 12, 13 für mindestens eine ausschließlich radial gerichtete Verschraubung 20, 201 zur Befestigung der Befestigungselemente 10, 11, 34, 35 an den radial zur Ringachse 23 gerichteten Gewindebohrungen 14 der sternwechselseitig befindlichen Sternarmstirnbereiche 4, 5 gemäß Fig. 6 vorhanden sind, wobei
- die keilförmigen Befestigungselemente 10, 11, 34, 35 jeweils eine zur Ringachse 23 gerichtete Fläche 31 aufweisen, die jeweils mit einer Fläche 29 der Sternarmstirnbereiche 4, 5 im Montagefall korrespondiert,
- zwischen den ringsegmentumlaufend benachbart angeordneten Befestigungselementen 10, 11, 34, 35 gemäß Fig. 6 jeweils ein elastisches Federelement 17 vorhanden ist, das an den jeweils benachbarten Befestigungselementen 10, 11, 34, 35 eines Ringsegments 21, 22 in einem Vulkanisierungsvorgang anvulkanisiert befestigt ist,
- wobei die abwechselnde Anordnung der keilförmigen Befestigungselemente 10, 11, 34, 35 und der elastischen Federelemente 17 jeweils mindestens zwei in einem Vulkanisierungsvorgang hergestellte Keilpaket-Ringsegmente 21, 22 ausbilden, die ringsegmentweise auf die beiden sternwechselseitig axial versetzten Sternarmstirnbereiche 4, 5 aufschraubbar sind,
- so dass der Keilpaketring 40 nach der Montage einen elastisch ausgebildeten Ring darstellt und eine einheitliche tangentiale Vorspannungserzeugung gestattet, wobei sich die tangentiale Vorspannungserzeugung auf die zwei sich axial zueinander winkelversetzt gegenüberliegende Sterne 2, 3 der zwei Kupplungsteile 8, 9 bezieht.

Mittels der radial gerichteten Verschraubungen 20 sind die Befestigungselemente 10 und 11 an die Sternarmstirnbereiche 4, 5 der Sterne 2, 3 der Kupplungsteile 8 oder 9 anschraubbar. Mittels der radial gerichteten Verschraubungen 201 werden die geteilten Schluss-Befestigungselemente 34, 35 unter Vorspannung an die Sternarmstirnbereiche 4, 5 der Sterne 2, 3 der Kupplungsteile 8, 9 angeschraubt.

In Fig. 7 wird eine schematische Darstellung eines weiteren Ringsegments 24 eines erfindungsgemäßen Keilpaketrings 40 mit einer modifizierten Ausführung des im Längsschnitt stuhlartigen Keil-Innenteils 353 ohne Vertiefung 19, aber dafür mit einem Kopfschlussteil 355, und des im Längsschnitt spitzhammerartigen Keil-Außenteils 342 gegenüber Fig. 5a und Fig. 5b gezeigt.

Bei einer Zusammenführung von zwei Ringsegmenten 24, 24 (nicht gezeichnet) kontaktieren die beiden Keil-Teile 353 und 342 an den Kontaktflächen 15 und 16 bzw. 58 und 59 zu jeweils einem Schluss-Befestigungselement 34, 35. Die dabei entstehenden Schluss-Befestigungselemente 34, 35 weisen keine Vertiefung 19 auf und werden mit den den Keilpaketring 40 überstehenden Schrauben der Verschraubung 201 fest an das vorgesehene Kupplungsteil 8 oder 9 angeschraubt. Alternativ können an den Endbereichen der Ringsegmente 24 gleiche Keil-Teile vorhanden sein.

Die Fig. 8 zeigt Darstellungen der beiden zueinander passenden Keil-Teile 353 und 342 nach Fig. 7, wobei
die Fig. 8a das gegenüber den Fig. 5a und Fig. 5b modifizierte Keil-Innenteil 353 mit einem Kopfschlussteil 355 und
die Fig. 8b ein gleiches im Längsschnitt spitzhammerartiges Keil-Außenteil 342, wie in Fig. 5a und Fig. 5b, zeigen.

Das im Längsschnitt vorgenannte stuhlartige Keil-Innenteil 352 ist dabei durch ein angebrachtes Kopfschlussteil 355 modifiziert und bei Ausbildung des Schlusses 38 liegt das Kopfschlussteil 355 auch an dem im Längsschnitt spitzhammerartigen Keil-Außenteil 342 an.

Die Keil-Innenteile 353 und die Keil-Außenteile 342 können die Bohrung 13 oder 12 aufweisen.

Die kontaktierenden Kontaktflächen 15 und 16, 58 und 59 bilden einen Formschluss, die kontaktierenden Kontaktflächen 52, 53 sowie 54, 55 bilden jeweils einen Kraftschluss.

Die Fig. 9 zeigt eine Darstellung eines weiteren Ringsegments 25 bzw. 26 mit halbierten Schlussteil-Befestigungselementen 344, 354 an den Endbereichen 42, 44 des Ringsegments 25.

Das einstückige Ringsegment 25; 26 mit halbierten Schlussteil-Befestigungselemen- ten 344, 354 gemäß Fig. 9 ist an den Endbereichen 42, 44 des Ringsegments 25; 26 mit mindestens einer Ausnehmung 47 im halbierten SchlussteilBefestigungselement 344 und mit mindestens einer Ausnehmung 48 im anderen halbierten Schlussteil-Befestigungselement 354 ausgebildet ist, wobei die beiden einstückigen Ringsegmente 25; 26 zu einem Keilpaketring 40 gemäß Fig. 11 zusammenfügbar sind, wenn die zueinander korrespondierenden halbierenden Schlussteil-Befestigungselemente 344, 354 sich gegenüberliegend kontaktieren und jeweils ein Schluss-Befestigungselement 34, 35 ausbilden, und
wobei in den voneinander beabstandeten Ausnehmungen (47, 48) klammer- oder brückenartige Einfügeelemente (7) zur Halterung der Schluss-Befestigungselemente (34, 35) eingebracht sind.

Fig. 10 zeigt Darstellungen gemäß Fig. 9 von Komponenten eines mit einer Verschlussvorrichtung 51 ausgebildeten Schluss-Befestigungselements 34 zur Zusammenführung der Endbereiche der Ringsegmente 25, 26 eines Keilpaketrings 40, wobei
die Fig. 10a eine Verschlussvorrichtung 51 in den beiden Schlussteil-Befestigungselementhälften 344, 354, bestehend aus radial gerichteten Ausnehmungen 47, 48 in den Schlussteil-Befestigungselementhälften 344, 354 und aus einem in die Ausnehmungen 47, 48 einfügbaren Einfügeelement 7,
die Fig. 10b die beiden angenäherten Schlussteil-Befestigungselementhälften 344, 354 mit den sich gegenüberliegenden voneinander beabstandeten Ausnehmungen 47, 48, und
die Fig. 10c eine Draufsicht auf die Vertiefung 19 der beiden zusammengefügten sich an den Kontaktflächen 56, 57 berührenden Schlussteil-Befestigungselementhälften 344, 354 mit den eckseitig eingebrachten, voneinander beabstandeten Ausnehmungen 47, 48 und mit dem freien Einfügeelement 7 zeigen.

Die Einfügeelemente 7 können als Klammer mit parallel gerichteten endseitigen Nasen 45, 46 ausgebildet sein und werden mit ihren endseitigen Nasen 45, 46 in die den Nasen 45, 46 angepassten Ausnehmungen 47 und 48 zur Arretierung und zum Verschluss der beiden Schlussteil-Befestigungselementhälften 344 und 345 über die Vertiefung 19 eingebunden oder eingefügt bzw. gesteckt. Danach erfolgt die kraftschlüssige Verbindung mit der Verschraubung 201.

Die Ausnehmungen 47, 48 sind in Fig. 10c in ihrer Ausbildung den einzusteckenden Nasen 45, 46 angepasst.

Für das andere Schluss-Befestigungselement 35 gilt Gleiches.

In Fig. 11 ist eine schematische Darstellung des erfindungemäßen Keilpaketrings 40 ohne Kupplungsteile 8, 9, dafür aber mit den beiden Verschlussvorrichtungen 51 der Schluss-Befestigungselemente 34, 35 gezeigt.

Der Vorteil des in Fig. 11 gezeigten Keilpaketrings 40 besteht darin, dass die beiden einstückigen Ringsegmente 25, 26 gleich ausgebildet sind und dadurch mit den beiden Verschlussvorrichtungen 51 für die beiden Schluss-Befestigungselemente 34, 35 eine einfache und schnelle Montage des Keilpaketrings 40 ermöglichen.

In Fig. 12 ist eine schematische Darstellung eines geteilten Befestigungselements 34 mit einer Hülse 6 im Innern, insbesondere in der Bohrung 12 oder 13 des Befestigungselements 34 gezeigt. In die Hülse 6 kann die Verschraubung 201 (nicht eingezeichnet) eingebracht sein. Die Hülse 6 kann als Haltehülse für die beiden Keil-Teile 341, 342 des geteilten Befestigungselements 34 dienen. Auch kann zur Verschraubung 201 eine Passschraube (nicht eingezeichnet) eingesetzt sein. Für das geteilte Befestigungselement 35 mit den Keil-Teilen 352, 351 und mit der Hülse 6 oder nur mit der Passschraube (nicht eingezeichnet) gilt etwa Gleiches.

Im Folgenden wird der erfindungsgemäße Kupplungsring 40 in Form des Keilpaketrings für die Kupplung 50 mit der im Stand der Technik beschriebenen Kupplung 30 in Verbindung mit den beiden Kupplungsteilen 8, 9 beschrieben.

Die den Befestigungselementen 10, 11, 34, 35 des Keilpaketrings 40 angepassten, jeweils zu einem Stern 2, 3 gehörenden Sternarmstirnbereiche 4, 5 stellen jeweils Endbereiche der von einem zentralen Bereich des Sterns 2, 3 ausgehenden Sternarme 27, 28 dar, wobei die Endbereiche eine zu den Befestigungselementen 10, 11 gerichtete Fläche 29 aufweisen, mit der eine berührende Verbindung zur Fläche 31 am keilförmig schmalen Endbereich 32 des keilförmigen Befestigungselementes 10, 11, 34, 35 herbeiführbar ist.

Die Sternarmstirnbereiche 4, 5 der Sterne 2, 3 können jeweils eine axial gerichtete Fläche 29 mit Profil aufweisen, die vor der Verschraubung 20, 201 unterhalb der Fläche 31 mit Profil am keilförmig schmalen Endbereich 32 des jeweiligen zugeordneten Befestigungselementes 10, 11, 34, 35 positioniert ist, wobei im Montagefall sich beide Flächen 29, 31 berühren.

Die Profile der Flächen 31 der Befestigungselemente 10, 11, 34, 35 und die Profile der Flächen 29 der Sternarmstirnbereiche 4, 5 können korrespondierende zueinander formschlüssige Ausbildungen sein.

Durch die Verschraubungen 20, 201 wird generell ein Kraftschluss zwischen dem Keilpaketring 40 und den Kupplungsteilen 8, 9 erreicht, der von den Formschlüssen (Feder, Nut) unterstützt wird. Im Allgemeinen besteht eine Mischform zwischen Kraftschluss und Formschluss im Bereich der Verbindung zwischen Keilpaketring 40 und den beiden der Kupplung 50 zugeordneten Kupplungsteilen 8, 9. Die mindestens einen der Schlüsse aufweisenden Befestigungselemente werden als Schluss-Befestigungselemente oder Schlussteil-Befestigungselemente bezeichnet.

Alle metallischen Befestigungselemente 10, 11, 34, 35 können am keilförmig weiten Endbereich 33 vorzugsweise äußere Einlassungen/Aussparungen/Vertiefungen 19 jeweils in Form einer Versenkungsnut oder einer Senkbohrung für die radial gerichteten Verschraubungen 20, 201 aufweisen.

Die Federelemente 17 können total aus Gummi bestehen. Die Federelemente 17 können aber auch mindestens eine zur Ringachse 23 gerichtete ebene Stützplatte 18 aufweisen.

Die Formen der Befestigungselemente 10, 11, 34, 35 sind derart den Formen des Federelements 17 angepasst, dass die Vulkanisierung der Federelemente 17 an den Befestigungselementen 10, 11, 34, 35 bei den einstückigen Ringsegmenten 21, 22, 25, 26 in gleicher Qualität erfolgen kann.

Mittels der Verschraubungen 20, 201 können wechselweise, ausgehend von einem Befestigungselement 10 des Keilpaketrings 40, das Befestigungselement 10 mit dem Sternarmstirnbereich 4 des einen Sterns 2 verbunden sein und dann das dem Befestigungselement 10 benachbarte Befestigungselement 11 mit dem zum Sternarmstirnbereich 4 des einen Sterns 2 benachbarten Sternarmstirnbereich 5 des anderen Sterns 3 verbunden sein, wobei danach wieder ein weiteres Befestigungselement 10 mit einem weiteren Sternarmstirnbereich 4 des einen Sterns 2 verbunden ist, usw., so dass der Keilpaketring 40 am Ringinnenbereich 36 auf den ineinander greifenden Kupplungsteilen 8, 9 radial aufgeschraubt ist.

Die Vorteile des erfindungsgemäßen elastischen segmentierten Keilpaketrings 40 mit tangentialer Vorspannungserzeugung auf den zwei Kupplungsteilen 8, 9 in der Kupplung 50 bestehen in einem durch die gleichzeitige Vulkanisierung aller Federelemente 17 an die benachbarten Befestigungselemente 10, 11, 34, 35 der jeweiligen Ringsegmente 25, 26 erzeugten gleichmäßigen Verlagerungsausgleich sowie insbesondere einer Einsparung einer Montagevorrichtung zur gleichmäßigen Vorspannungserzeugung auf den Sternen 2, 3 der Kupplungsteile 8, 9.

Das Wesen der Erfindung ermöglicht eine Befestigung eines ringsegmentierten, zwei- oder mehrstückigen Keilpaketrings 40 aus zumindest den beiden jeweils einzeln vulkanisierten Ringsegmenten 25, 26 durch die ausschließlich radiale Verschraubung 20, 201 auf die unterhalb der Befestigungselemente 10, 11, 34, 35 befindlichen und mit radial gerichteten Gewindebohrungen 14 ausgebildeten, gegenüber den Sternmitten axial versetzten Sternarmstirnbereiche 4, 5 der Kupplungssterne 2, 3. Außerdem unterstützen die ausgeprägten korrespondierenden Profile 29, 31 die Arretierung des Keilpaketring 40 an den Sternarmstirnbereichen 4, 5 der Kupplungsteile 8, 9.

Im Übrigen können die Befestigungselemente 10, 11, 34, 35 aus festem Material bestehen, insbesondere metallisch oder aus einer anderen festen Substanz/Stoff/Werkstoff ausgebildet sein.

Durch das Aufschrauben des Keilpaketrings 40 auf die Endbereiche der Kupplungsteile 8, 9 wird eine radiale Vorspannung in der betreffenden Kupplung 50 sowohl in den ungeteilten Befestigungselementen als auch in den geteilten Schluss-Befestigungselementen erzeugt.

### Bezugszeichenliste

- 1: Kupplungsring als Keilpaketring nach dem Stand der Technik/Keilpaketring
- 2: Erster Stern
- 3: Zweiter Stern
- 4: Erster Sternarmstirnbereich
- 5: Zweiter Sternarmstirnbereich
- 6: Hülse
- 7: Einfügeelement
- 8: Erstes Kupplungsteil
- 9: Zweites Kupplungsteil
- 10: Erstes Befestigungselement
- 11: Zweites Befestigungselement
- 12: Erste Bohrung
- 13: Zweite Bohrung
- 14: Gewindebohrung
- 15: Kontaktfläche
- 16: Kontaktfläche
- 17: Federelement
- 18: Radial gerichtete Stützplatte
- 19: Versenkungsnut/Senkbohrung/Vertiefung
- 20: Radial gerichtete Verschraubung
- 201: Verschraubung für geteilte Schluss-Befestigungselemente
- 21: erstes Ringsegment
- 22: zweites Ringsegment
- 23: Ringachse des Keilpaketrings
- 24: Ringsegment
- 25: Ringsegment
- 26: Ringsegment
- 27: Sternarm des einen Sterns
- 28: Sternarm des anderen Sterns
- 29: Fläche des Sternarmstirnbereichs/Profil
- 30: Kupplung mit Kupplungsring nach dem Stand der Technik
- 31: Fläche des Befestigungselements/Profil
- 32: keilförmig schmaler Endbereich
- 33: keilförmig weiter Endbereich
- 34: erstes Schluss-Befestigungselement
- 341: im Längsschnitt stuhlartiges Keil-Innenteil
- 342: im Längsschnitt spitzhammerartiges Keil-Außenteil
- 344: halbiertes Schlussteil-Befestigungselement
- 35: zweites Schluss-Befestigungselement
- 351: im Längsschnitt spitzhammerartiges Keil-Außenteil
- 352: im Längsschnitt stuhlartiges Keil-Innenteil
- 353: Keil-Innenteil mit Kopfschlussteil
- 354: halbiertes Schlussteil-Befestigungselement
- 355: Kopfschlussteil
- 36: Ringinnenbereich
- 37: Ringaußenbereich
- 38: Schluss/Formschluss/Kraftschluss
- 40: erfindungsgemäßer Kupplungsring
- 41: Endbereich
- 42: Endbereich
- 43: Endbereich
- 44: Endbereich
- 45: erste Nase
- 46: zweite Nase
- 47: erste Ausnehmung
- 48: zweite Ausnehmung
- 50: Kupplung mit erfindungsgemäßem Kupplungsring/Keilpaketring
- 51: Verschlussvorrichtung
- 52: Kontaktfläche
- 53: Kontaktfläche
- 54: Kontaktfläche
- 55: Kontaktfläche
- 56: Kontaktfläche
- 57: Kontaktfläche
- 58: Kontaktfläche
- 59: Kontaktfläche

## Patentansprüche

1. Kupplungsring (40) für Kupplungen (50) mit mindestens zwei Kupplungsteilen (8, 9), wobei der Kupplungsring (40) als Keilpaketring ausgebildet ist, zumindest umfassend
mehrere zur Ringachse (23) des Keilpaketrings (40) gerichtete, ringumlaufend angeordnete Befestigungselemente (10, 11) mit jeweils mindestens einer ausschließlich radial zur Ringachse (23) gerichteten durchgängigen Bohrung (12, 13), wobei die durchgängigen Bohrungen (12, 13) für mindestens eine ausschließlich radial gerichtete, vom Ringaußenbereich (37) aus ausführbare Verschraubung (20) zur Befestigung der Befestigungselemente (10, 11) auf zwei angepasste Kupplungsteile (8, 9) zur Verbindung der beiden Kupplungsteile (8, 9) dienen, wobei
- die Befestigungselemente (10, 11) am Ringinnenbereich (36) jeweils ein axial verlaufendes Profil (31) zur Ringachse (23) gerichtet aufweisen,
- zwischen den benachbarten Befestigungselementen (10, 11) jeweils ein elastisches Federelement (17) vorhanden ist, das an den benachbarten Befestigungselementen (10, 11) in einem gleichzeitig durchgeführten Vulkanisierungsvorgang anvulkanisiert befestigt ist,
- so dass eine wechselweise Anordnung der Befestigungselemente (10, 11) und der elastischen Federelemente (17) den Keilpaketring (40) darstellt, der auf die zwei angepassten Kupplungsteile (8, 9) zur Verbindung der beiden Kupplungsteile (8, 9) radial aufschraubbar ist,
**dadurch gekennzeichnet,**
**dass** der Keilpaketring (40) in mindestens zwei voneinander trennbare einstückige Ringsegmente (21, 22, 24, 25, 26) aus einer wechselweisen Anordnung der Befestigungselemente (10, 11) und der Federelemente (17) geteilt ist, wobei die voneinander trennbaren einstückigen Ringsegmente (21, 22, 24, 25, 26) durch an einem Ringsegment (21, 22, 24, 25, 26) jeweils endbereichsseitig befindliche und zur Ausbildung eines kontaktierenden Schlusses (38) versehene voneinander trennbaren Schluss-Befestigungselemente (34, 35) bestückt sind, wobei die geteilten und voneinander trennbaren, die Ringsegmente (21, 22, 24, 25, 26) verbindenden Schluss-Befestigungselemente (34, 35) jeweils aneinander angepasste Keil-Teile (341, 342; 351, 352; 342, 353; 344, 354) mit zur Ringachse (23) radial gerichtete Bohrungen (12, 13) aufweisen, wobei die einen Schluss aufweisenden Keil-Teile (341, 342; 351, 352; 342, 353; 344, 354) jeweils über eine radial gerichtete Verschraubung (201) auf einer der beiden Kupplungsteile (8, 9) zusammenfügbar sind.

2. Kupplungsring nach Anspruch 1, **dadurch gekennzeichnet, dass** die Schluss-Befestigungselemente (34, 35) Elemente sind, die durch die Teilung bzw. Segmentierung des Keilpaketrings (40) anstelle der ursprünglichen ungeteilten Befestigungselemente (10, 11) an den jeweiligen Endbereichen (41, 42; 43, 44) der einstückigen Ringsegmente (21, 22, 24, 25, 26) entstehen und die durch einen Schluss als Formschluss und/oder als Kraftschluss zusammengeführt sind.

3. Kupplungsring nach Anspruch 1 oder 2, **dadurch gekennzeichnet, dass** der Schluss (38) an den jeweiligen Endbereichen der Ringsegmente (21, 22; 24; 25, 26) zustandekommt, wenn eine definierte Kontaktfläche (15, 58) des Keil-Außenteils (342; 351) mit einer mit der Kontaktfläche (15, 58) korrespondierenden Kontaktfläche (16, 59) des Keil-Innenteils (341, 352) in festem Schluss miteinander stehen.

4. Kupplungsring nach den Ansprüchen 1 bis 3, **dadurch gekennzeichnet, dass** ein mindestens in zwei Ringsegmente (21, 22) geteilter Keilpaketring (40) mit einem Keil-Innenteil (341, 352) und mit einem Keil-Außenteil (342, 351) an jeweils einem Endbereich (41, 42; 43, 44) des jeweils zugehörigen Ringsegments (21, 22) versehen ist, wobei ein erstes Ringsegment (21) mit einem Keil-Außenteil (351) an seinem einen Endbereich (44) und einem Keil-Innenteil (341) an seinem anderen Endbereich (42) ausgebildet ist und ein zweites Ringsegment (22) mit einem Keil-Außenteil (342) an seinem einen Endbereich (41) und einem Keil-Innenteil (352) an seinem anderen Endbereich (43) ausgebildet ist, wobei sich jeweils das Keil-Innenteil (341; 352) des einen Ringsegments (21; 22) und das Keil-Außenteil (342; 351) des anderen Ringsegments (22; 21) vor der Schließung des Keilpaketrings (40) gegenüberliegen und bei Schließung des Keilpaketrings (40) für einen Schluss (38) angepasst kontaktieren.

5. Kupplungsring nach Anspruch 1, **dadurch gekennzeichnet, dass** sowohl mittels der radial gerichteten Verschraubungen (20) die Befestigungselemente (10, 11) an Sternarmstirnbereiche (4, 5) der Sterne (2, 3) der Kupplungsteile (8; 9) anschraubbar als auch mittels der radial gerichteten Verschraubungen (201) die geteilten Schluss-Befestigungselemente (34, 35) unter radialer Vorspannung an die Sternarmstirnbereiche (4, 5) der Sterne (2, 3) der Kupplungsteile (8, 9) anschraubbar sind.

6. Kupplungsring nach Anspruch 4, **dadurch gekennzeichnet, dass** ein Schluss-Befestigungselement (34; 35) aus einem im Längsschnitt spitzhammerartigen Keil-Außenteil (342; 351) und aus einem im Längsschnitt stuhlartigen Keil-Innenteil (341; 352) miteinander angepasst besteht, die jeweils mit ihren Kontaktflächen (15, 58) an den im Längsschnitt spitzhammerartigen Keil-Außenteilen (342; 351) und mit ihren Kontaktflächen (16, 59) an den im Längsschnitt stuhlartigen Keil-Innenteilen (341; 352) bei Ausbildung des Schlusses (38) in unmittelbarem Kontakt bei Schließung des Keilpaketrings (40) stehen, wobei besonders vorteilhaft das im Längsschnitt stuhlartige Keil-Innenteil (352) durch ein angebrachtes Kopfschlussteil (355) modifiziert ist und bei Ausbildung eines Schlusses (38) das Kopfschlussteil (355) auch an dem im Längsschnitt spitzhammerartigen Keil-Außenteil (342) anliegt.

7. Kupplungsring nach Anspruch 1, **dadurch gekennzeichnet, dass** ein einstückiges Ringsegment (25; 26) mit halbierten Schlussteil-Befestigungselementen (344, 354) an den Endbereichen (42, 44) des Ringsegments (25; 26) mit mindestens einer Ausnehmung (47) im halbierten SchlussteilBefestigungselement (344) und mit mindestens einer Ausnehmung (48) im anderen halbierten Schlussteil-Befestigungselement (354) ausgebildet ist, wobei die beiden einstückigen Ringsegmente (25; 26) zu einem Ring (40) zusammenfügbar sind, wenn die zueinander korrespondierenden halbierenden Schlussteil-Befestigungselemente (344, 354) sich gegenüberliegend kontaktieren und jeweils ein Schluss-Befestigungselement (34, 35) ausbilden und wobei in den voneinander beabstandeten Ausnehmungen (47, 48) klammer- oder brückenartige Einfügeelemente (7) zur Halterung der Schluss-Befestigungselemente (34, 35) eingebracht sind.

8. Kupplungsring nach Anspruch 7, **dadurch gekennzeichnet, dass** die Einfügeelemente (7) als Klammer oder Brücken mit parallel gleichgerichteten, endseitigen Nasen (45, 46) ausgebildet sind und mit ihren endseitigen Nasen (45, 46) in die den Nasen (45, 46) angepassten, voneinander beabstandeten Ausnehmungen (47, 48) zur Arretierung und zum Verschluss der beiden Schlussteil-Befestigungselementhälften (344, 354) zur Ausbildung der Schluss-Befestigungselemente (34, 35) eingebunden sind.

9. Kupplungsring nach den Ansprüchen 1 bis 8, **dadurch gekennzeichnet, dass** alle Befestigungselemente (10, 11, 34, 35) aus festem Material bestehen, insbesondere metallisch ausgebildet sind.

10. Kupplungsring nach den Ansprüchen 1 bis 9, **dadurch gekennzeichnet, dass** die Formen der Befestigungselemente (10, 11, 34, 35) derart den Formen des Federelements (17) angepasst sind, so dass die Vulkanisierung der Federelemente (17) an den Befestigungselementen (10, 11, 34, 35) bei den einstückigen Ringsegmenten (21, 22, 25, 26) in gleicher Qualität erfolgen kann.

11. Kupplungsring nach Anspruch 1, **dadurch gekennzeichnet, dass** die Befestigungselemente (10, 11, 34, 35) zur Ringachse (23) keilförmig geformt sind, wobei der keilförmig schmale Endbereich (32) ringinnen und der keilförmig weite Endbereich (33) ringaußen sind.

12. Kupplungsring nach den Ansprüchen 1 bis 11, **dadurch gekennzeichnet, dass** die Befestigungselemente (10, 11, 34, 35) an ihrem keilförmig weiten Endbereich (33) äußere Einlassungen/Aussparungen/Vertiefungen (19) jeweils in Form entweder einer Versenkungsnut oder einer Senkbohrung für die radial gerichteten Verschraubungen (20, 201) aufweisen.

13. Kupplungsring nach Anspruch 1, **dadurch gekennzeichnet, dass** die Federelemente (17) aus elastischem Material bestehen.

14. Kupplungsring nach den Ansprüchen 1 und 13, **dadurch gekennzeichnet, dass** die elastischen Federelemente (17) optional mindestens eine zur Ringachse (23) gerichtete Stützplatte (18) aufweisen.

15. Kupplungsring nach Anspruch 1, **dadurch gekennzeichnet, dass** die Bohrung (12, 13) eines geteilten Befestigungselements (34, 35) mit einer Hülse (6), durch die die Schraube der Verschraubung (201) zum jeweiligen Kupplungsteil (8, 9) geführt ist und die als Haltehülse für die beiden Keil-Teile (341, 342; 352, 351) des Befestigungselementes (34, 35) dient, versehen ist oder dass anstelle der Hülse (6) durch die Bohrung (12, 13) eine Passschraube in Richtung zu den Kupplungsteilen (8, 9) geführt ist.

## Claims

1. Coupling ring (40) for couplings (50) of at least two coupling parts (8, 9), wherein the coupling ring (40) is designed in the form of a wedge-assembly ring,
at least comprising
a plurality of encircling fastening elements (10, 11), which are directed towards the ring axis (23) of the wedge-assembly ring (40) and each have at least one through-bore (12, 13) directed exclusively radially in relation to the ring axis (23), wherein the through-bores (12, 13) serve for at least one exclusively radially directed screw-connection means (20), which can be provided from the outer ring region (37) and is intended for fastening the fastening elements (10, 11) on two matched coupling parts (8, 9) for the purpose of connecting the two coupling parts (8, 9), wherein
- at the inner ring region (36), the fastening elements (10, 11) each have an axially running profile (31) directed towards the ring axis (23),
- a respective elastic spring element (17) is present between the adjacent fastening elements (10, 11) and is fastened on each of the adjacent fastening elements (10, 11) by being vulcanized thereon in simultaneously performed vulcanization operations,
- and therefore an alternating arrangement of the fastening elements (10, 11) and of the elastic spring elements (17) makes up the wedge-assembly ring (40), which can be screwed radially onto the two matched coupling parts (8, 9) for the purpose of connecting the two coupling parts (8, 9),
**characterized**
**in that** the wedge-assembly ring (40) is split into at least two single-piece ring segments (21, 22, 24, 25, 26), which can be separated from one another and are made up of an alternating arrangement of the fastening elements (10, 11) and of the spring elements (17), wherein the separable, single-piece ring segments (21, 22, 24, 25, 26) are fitted with separable closure-fastening elements (34, 35), which are each located at the end regions of a ring segment (21, 22, 24, 25, 26) and are provided to form a contact-establishing closure (38), wherein the split and separable closure-fastening elements (34, 35), which connect the ring segments (21, 22, 24, 25, 26), each have wedge parts (341, 342; 351, 352; 342, 353; 344, 354), which are matched to one another and have bores (12, 13) directed radially in relation to the ring axis (23), wherein the closure-containing wedge parts (341, 342; 351, 352; 342, 353; 344, 354) can be joined together in each case via a radially directed screw-connection means (201) on one of the two coupling parts (8, 9).

2. Coupling ring according to Claim 1, **characterized in that** the closure-fastening elements (34, 35) are elements which are produced by the splitting or segmentation of the wedge-assembly ring (40), in place of the originally non-split fastening elements (10, 11), at the respective end regions (41, 42; 43, 44) of the single-piece ring segments (21, 22, 24, 25, 26) and which are brought together by a closure in the form of a form-fit closure and/or force-fit closure.

3. Coupling ring according to Claim 1 or 2, **characterized in that** the closure (38) at the respective end regions of the ring segments (21, 22; 24; 25, 26) is established when a defined contact surface (15, 58) of the outer wedge part (342; 351) and a contact surface (16, 59) of the inner wedge part (341, 352), said contact surface (16, 59) corresponding with the contact surface (15, 58), together form a firm closure.

4. Coupling ring according to Claims 1 to 3, **characterized in that** a wedge-assembly ring (40), which is split at least into two ring segments (21, 22), is provided with an inner wedge part (341, 352) and with an outer wedge part (342, 351) at a respective end region (41, 42; 43, 44) of the respectively associated ring segment (21, 22), wherein a first ring segment (21) is formed with an outer wedge part (351) at its one end region (44) and an inner wedge part (341) at its other end region (42), and a second ring segment (22) is formed with an outer wedge part (342) at its one end region (41) and an inner wedge part (352) at its other end region (43), wherein in each case the inner wedge part (341; 352) of the one ring segment (21; 22) and the outer wedge part (342; 351) of the other ring segment (22; 21) are located opposite one another prior to the wedge-assembly ring (40) being closed and, when the wedge-assembly ring (40) is being closed, establish contact in a matched state for a closure (38).

5. Coupling ring according to Claim 1, **characterized in that** it is both the case that the fastening elements (10, 11) can be screwed to star-arm end regions (4, 5) of the stars (2, 3) of the coupling parts (8; 9) by the radially directed screw-connection means (20) and that the split closure-fastening elements (34, 35) can be screwed, with radial prestressing, onto the star-arm end regions (4, 5) of the stars (2, 3) of the coupling parts (8, 9) by the radially directed screw-connection means (201) .

6. Coupling ring according to Claim 4, **characterized in that** a closure-fastening element (34; 35) comprises a pick-hammer-like outer wedge part (342; 351) as seen in longitudinal section, and a chair-like inner wedge part (341; 352), as seen in longitudinal section, the two parts being matched to one another and, for formation of the closure (38), each have their contact surfaces (15, 58) on the pick-hammer-like outer wedge parts (342; 351), as seen in longitudinal section, and their contact surfaces (16, 59) on the chair-like inner wedge parts (341; 352), as seen in longitudinal section, in direct contact when the wedge-assembly ring (40) is being closed, wherein the chair-like inner wedge part (352), as seen in longitudinal section, is particularly advantageously modified by an attached head-closure part (355) and, for formation of a closure (38), the head-closure part (355) also butts against the pick-hammer-like outer wedge part (342), as seen in longitudinal section.

7. Coupling ring according to Claim 1, **characterized in that** a single-piece ring segment (25; 26) with halved closure-part-fastening elements (344, 54) at the end regions (42, 44) of the ring segments (25; 26) is formed with at least one recess (47) in the halved closure-part-fastening element (344) and with at least one recess (48) in the other halved closure-part-fastening element (354), wherein the two single-piece ring segments (25; 26) can be joined together to form a ring (40) when the mutually corresponding, half-forming closure-part-fastening elements (344, 354) establish contact opposite one another and form a closure-fastening element (34, 35) in each case, and wherein clip-like or bridge-like insertion elements (7) are introduced into the spaced-apart recesses (47, 48) for the purpose of retaining the closure-fastening elements (34, 35).

8. Coupling ring according to Claim 7, **characterized in that** the insertion elements (7) are designed in the form of clips or bridges with end noses (45, 46) which are oriented in the same direction parallel to one another, and the insertion elements have their end noses (45, 46) incorporated in the spaced-apart recesses (47, 48), which are matched to the noses (45, 46), for the purposes of arresting and of closing the two halves (344, 354) of the closure-part-fastening elements to form the closure-fastening elements (34, 35).

9. Coupling ring according to Claims 1 to 8, **characterized in that** all the fastening elements (10, 11, 34, 35) consist of solid material, in particular are formed from metal.

10. Coupling ring according to Claims 1 to 9, **characterized in that** the shapes of the fastening elements (10, 11, 34, 35) are matched to the shapes of the spring elements (17), and therefore the operations of vulcanizing the spring elements (17) on the fastening elements (10, 11, 34, 35) can take place with the same levels of quality for the single-piece ring segments (21, 22, 25, 26).

11. Coupling ring according to Claim 1, **characterized in that** the fastening elements (10, 11, 34, 35) are formed in a wedge-shaped manner in relation to the ring axis (23), wherein the narrow end region (32) of the wedge is on the inside of the ring and the wide end region (33) of the wedge is on the outside of the ring.

12. Coupling ring according to Claims 1 to 11, **characterized in that**, at their wide end region (33), the fastening elements (10, 11, 34, 35) have outer indents/cutouts/depressions (19) each in the form either of a recessed groove or of a counterbore for the radially directed screw-connection means (20, 201).

13. Coupling ring according to Claim 1, **characterized in that** the spring elements (17) consist of elastic material.

14. Coupling ring according to Claims 1 and 13, **characterized in that** the elastic spring elements (17) optionally have at least one supporting plate (18) directed towards the ring axis (23).

15. Coupling ring according to Claim 1, **characterized in that** the bore (12, 13) of a split fastening element (34, 35) is provided with a sleeve (6), through which the screw of the screw-connection means (201) is guided to the respective coupling part (8, 9) and which serves as a retaining sleeve for the two wedge parts (341, 342; 352, 351) of the fastening element (34, 35), or **in that**, instead of the sleeve (6), a fitting screw is guided through the bore (12, 13) in the direction of the coupling parts (8, 9).

## Revendications

1. Disque d'embrayage (40) pour embrayages (50), comprenant au moins deux parties d'embrayage (8, 9), le disque d'embrayage (40) étant réalisé sous forme de disque à paquets de cales, comprenant au moins
plusieurs éléments de fixation (10, 11) disposés sur la périphérie du disque, orientés vers l'axe de disque (23) du disque à paquets de cales (40), comprenant chacun au moins un alésage traversant (12, 13) orienté exclusivement radialement par rapport à l'axe de disque (23), les alésages traversants (12, 13) étant prévus pour au moins un vissage (20) pouvant être effectué à partir de la région extérieure du disque (37), orienté exclusivement radialement, pour la fixation des éléments de fixation (10, 11) sur deux parties d'embrayage adaptées (8, 9) pour le raccordement des deux parties d'embrayage (8, 9),
- les éléments de fixation (10, 11) présentant, au niveau de la région intérieure du disque (36), à chaque fois un profil s'étendant axialement (31) orienté vers l'axe de disque (23),
- à chaque fois un élément de ressort élastique (17) étant prévu entre les éléments de fixation adjacents (10, 11), lequel est fixé au niveau des éléments de fixation adjacents (10, 11) par vulcanisation dans une opération de vulcanisation effectuée simultanément,
- de telle sorte qu'un agencement en alternance des éléments de fixation (10, 11) et des éléments de ressort élastiques (17) constitue le disque à paquets de cales (40) qui peut être vissé radialement sur les deux parties d'embrayage adaptées (8, 9) pour le raccordement des deux parties d'embrayage (8, 9),
**caractérisé en ce que**
le disque à paquets de cales (40) est divisé en au moins deux segments de disque d'une seule pièce (21, 22, 24, 25, 26) pouvant être séparés les uns des autres, constitués d'un agencement en alternance des éléments de fixation (10, 11) et des éléments de ressort (17), les segments de disque d'une seule pièce (21, 22, 24, 25, 26) pouvant être séparés les uns des autres étant équipés d'éléments de fixation par engagement (34, 35) pouvant être séparés les uns des autres, se trouvant à chaque fois du côté de la région d'extrémité au niveau d'un segment de disque (21, 22, 24, 25, 26) et prévus pour réaliser un engagement par contact (38), les éléments de fixation par engagement (34, 35) divisés et pouvant être séparés les uns des autres, qui relient les segments de disque (21, 22, 24, 25, 26), présentant à chaque fois des parties de cales adaptées les unes aux autres (341, 342 ; 351, 352 ; 342, 353 ; 344, 354) avec des alésages (12, 13) orientés radialement par rapport à l'axe de disque (23), les parties de cales (341, 342 ; 351, 352 ; 342, 353 ; 344, 354) présentant un engagement pouvant être à chaque fois assemblées, par le biais d'un vissage orienté radialement (201), sur l'une des deux parties d'embrayage (8, 9) .

2. Disque d'embrayage selon la revendication 1, **caractérisé en ce que** les éléments de fixation par engagement (34, 35) sont des éléments qui sont obtenus par la division ou la segmentation du disque à paquets de cales (40) au lieu des éléments de fixation initiaux non divisés (10, 11), au niveau des régions d'extrémité respectives (41, 42 ; 43, 44) des segments de disque d'une seule pièce (21, 22, 24, 25, 26).

3. Disque d'embrayage selon la revendication 1 ou 2, **caractérisé en ce que** l'engagement (38) a lieu au niveau des régions d'extrémité respective des segments de disque (21, 22 ; 24 ; 25, 26) lorsqu'une surface de contact définie (15, 58) de la partie extérieure de cale (342 ; 351) est engagée fixement avec une surface de contact (16, 59) de la partie intérieure de cale (341, 352) correspondant à la surface de contact (15, 58).

4. Disque d'embrayage selon les revendications 1 à 3, **caractérisé en ce qu'**un disque à paquets de cales (40) divisé au moins en deux segments de disque (21, 22) est pourvu d'une partie intérieure de cale (341, 352) et d'une partie extérieure de cale (342, 351) au niveau d'une région d'extrémité respective (41, 42 ; 43, 44) du segment de disque associé respectif (21, 22), un premier segment de disque (21) étant réalisé avec une partie extérieure de cale (351) au niveau de l'une de ses régions d'extrémité (44) et avec une partie intérieure de cale (341) au niveau de son autre région d'extrémité (42) et un deuxième segment de disque (22) étant réalisé avec une partie extérieure de cale (342) au niveau de l'une de ses régions d'extrémité (41) et avec une partie intérieure de cale (352) au niveau de son autre région d'extrémité (43), la partie intérieure de cale (341 ; 352) de l'un des segments de disque (21 ; 22) et la partie extérieure de cale (342 ; 351) de l'autre segment de disque (22 ; 21) étant à chaque fois opposées l'une à l'autre avant la fermeture du disque à paquets de cales (40) et venant en contact de manière adaptée pour un engagement (38) lors de la fermeture du disque à paquets de cales (40).

5. Disque d'embrayage selon la revendication 1, **caractérisé en ce qu'**à la fois les éléments de fixation (10, 11) peuvent être vissés, au moyen de vissages orientés radialement (20), sur des régions frontales de bras d'étoiles (4, 5) des étoiles (2, 3) des parties d'embrayage (8 ; 9), et les éléments de fixation à engagement divisés (34, 35) peuvent être vissés, au moyen de vissages orientés radialement (201), avec précontrainte radiale sur les régions frontales de bras d'étoiles (4, 5) des étoiles (2, 3) des parties d'embrayage (8, 9).

6. Disque d'embrayage selon la revendication 4, **caractérisé en ce qu'**un élément de fixation par engagement (34 ; 35) se compose d'une partie extérieure de cale (342 ; 351) en forme de marteau pointu en coupe longitudinale et d'une partie intérieure de cale (341 ; 352) en forme de chaise en coupe longitudinale, adaptées l'une à l'autre, lesquelles viennent en contact direct lors de la fermeture du disque à paquets de cales (40) à chaque fois par leurs surfaces de contact (15, 58) au niveau des parties extérieures de cale (342 ; 351) en forme de marteau pointu en coupe longitudinale et par leurs surfaces de contact (16, 59) au niveau des parties intérieures de cale (341 ; 352) en forme de chaise en coupe longitudinale lors de la réalisation de l'engagement (38), la partie intérieure de cale (352) en forme de chaise en coupe longitudinale étant particulièrement avantageusement modifiée par une partie d'engagement de tête (355) rapportée et la partie d'engagement de tête (355), lors de la réalisation de l'engagement (38), s'appliquant également contre la partie extérieure de cale (342) en forme de marteau pointu en coupe longitudinale.

7. Disque d'embrayage selon la revendication 1, **caractérisé en ce qu'**un segment de disque d'une seule pièce (25 ; 26) est réalisé avec les éléments de fixation de partie d'engagement divisés en deux (344, 354) au niveau des régions d'extrémité (42, 44) du segment de disque (25 ; 26) avec au moins un évidement (47) dans l'élément de fixation de partie d'engagement divisé en deux (344) et avec au moins un évidement (48) dans l'autre élément de fixation de partie d'engagement divisé en deux (354), les deux segments de disque d'une seule pièce (25 ; 26) pouvant être assemblés pour former un seul disque (40) lorsque les éléments de fixation de partie d'engagement divisés en deux (344, 354), se correspondant mutuellement, viennent en contact en regard l'un de l'autre et constituent à chaque fois un élément de fixation par engagement (34, 35) et des éléments d'insertion (7) en forme de pince ou de pompe étant introduits dans les évidements espacés l'un de l'autre (47, 48) pour retenir les éléments de fixation par engagement (34, 35).

8. Disque d'embrayage selon la revendication 7, **caractérisé en ce que** les éléments d'insertion (7) sont réalisés en tant que pinces ou ponts avec des ergots (45, 46) aux extrémités, orientés parallèlement dans le même sens, et, avec leurs ergots (45, 46) aux extrémités, sont incorporés dans les évidements (47, 48) espacés l'un de l'autre, adaptés aux ergots (45, 46), pour bloquer et fermer les deux moitiés d'éléments de fixation de partie d'engagement (344, 354) pour réaliser les éléments de fixation par engagement (34, 35).

9. Disque d'embrayage selon les revendications 1 à 8, **caractérisé en ce que** tous les éléments de fixation (10, 11, 34, 35) se composent de matériaux fixes, en particulier sont réalisés sous forme métallique.

10. Disque d'embrayage selon les revendications 1 à 9, **caractérisé en ce que** les formes des éléments de fixation (10, 11, 34, 35) sont adaptées aux formes de l'élément de ressort (17) de telle sorte que la vulcanisation des éléments de ressort (17) sur les éléments de fixation (10, 11, 34, 35) puisse s'effectuer avec la même qualité dans le cas des segments de disque d'une seule pièce (21, 22, 25, 26) .

11. Disque d'embrayage selon la revendication 1, **caractérisé en ce que** les éléments de fixation (10, 11, 34, 35) sont formés en forme de cales par rapport à l'axe de disque (23), la région d'extrémité étroite en forme de cale (32) étant à l'intérieur du disque et la région d'extrémité large en forme de cale (33) étant à l'extérieur du disque.

12. Disque d'embrayage selon les revendications 1 à 11, **caractérisé en ce que** les éléments de fixation (10, 11, 34, 35) présentent, au niveau de leur région d'extrémité large en forme de cale (33), des ouvertures/évidements/renfoncements (19) à chaque fois soit en forme de rainure fraisée, soit en forme de trou borgne, pour les vissages orientés radialement (20, 201).

13. Disque d'embrayage selon la revendication 1, **caractérisé en ce que** les éléments de ressort (17) se composent de matériau élastique.

14. Disque d'embrayage selon les revendications 1 et 13, **caractérisé en ce que** les éléments de ressort élastique (17) présentent facultativement au moins une plaque de support (18) orientée vers l'axe de disque (23).

15. Disque d'embrayage selon la revendication 1, **caractérisé en ce que** l'alésage (12, 13) d'un élément de fixation divisé (34, 35) est pourvu d'au moyen une douille (6) à travers laquelle est guidée la vis du vissage (201) vers la partie d'embrayage respective (8, 9) et qui sert de douille de retenue pour les deux parties de cale (341, 342 ; 352, 351) de l'élément de fixation (34, 35), ou **en ce qu'**à la place de la douille (6), une vis de réglage est guidée à travers l'alésage (12, 13) dans la direction des parties d'embrayage (8, 9).
